# EUROPEAN PATENT SPECIFICATION

(11) **EP 0 610 375 B1**
(45) Date of publication and mention of the grant of the patent: **30.07.1997**
(21) Application number: 92923045.6
(22) Date of filing: 09.11.1992
(51) Int. Cl.: B60K 17/356, F16H 47/02

(54) **POWER TRANSMISSION SYSTEM**
KRAFTÜBERTRAGUNGSSYSTEM
SYSTEME DE TRANSMISSION DE PUISSANCE

(30) Priority: 08.11.1991 FI 915263
(43) Date of publication of application: 17.08.1994
(73) Proprietor: RAUNISTO, Airi, SF-13210 Hämeenlinna (FI)
(72) Inventor: RAUNISTO, Yrjö, SF-13210 Hämeenlinna (FI)
(74) Representative: Nyberg, Bengt
(86) International application number: FI9200302
(87) International publication number: WO9309002

(56) References cited:
- DE-B- 1 153 268
- GB-A- 2 083 893
- GB-A- 2 227 079
- GB-A- 2 229 977

## Description

### FIELD OF THE INVENTION

The invention relates to a system for transmission of power from the engine to the wheels in a vehicle or a working machine.

### BACKGROUND OF THE INVENTION

Generally known in working machines are hydraulic hub motors, which function directly as a collar bearing and a fastening flange of the wheels and also rotate the wheels. By said means it is easy to arrange the drive both for the turning and fixed wheels. Hydraulic power transmission is usually utilized in slow-speed working machines, where a hydraulic function is needed for many other purposes. The speed of rotation of the hydraulic motor is adjusted by altering the speed of fluid.

The hydraulic motor is not adaptable to a great speed range of wheel rotation without lessening the efficiency. Thus, if a hydraulic motor has a great torsion at small speeds, especially in working machine operation, its efficiency is reduced when the vehicle is transported at greater speeds on roads by the same motor construction. The efficiency is, therefore, not as good as a mechanical power transmission. In the above case, the solutions in the German publications 1113639 and 1153268 are referred to. Further, in the Swiss patent 494140 a hydrostatic power transmission is also used even at the greatest speed and always with engaged four wheel drive.

### SUMMARY OF THE INVENTION

By means of the system according to the main claim a decisive improvement is achieved compared to the above described disadvantages.

According to the invention, the hydraulic pump and the hydraulic motors are coupled to allow a slow speed in which several wheels are driven with a rather great torsional moment. Changing the coupling provides a greater speed of fluid for each hydraulic motor, thereby increasing the speed of the driving wheels. The greatest speed is reached while transmitting the power mechanically to the driving wheels and bypassing the hydraulic system. The mechanical power transmission is simply achieved with a toothed coupling, such that the clutch behind the motor can be omitted. Damage in the power transmission on coupling can be prevented by constructing the toothed coupling to prevent incorrect timing of the coupling. The hydraulic motors placed in the wheels during power transmission, which in this inventional construction are radial piston motors, switch to free rotation, such that they brake only by means of their bearing friction, while radial piston motors, which are-generally used as driving engines, brake much more in their idle state causing a remarkable drop in efficiency. By a power transmission system according to this invention the advantages of a mechanical system can be utilized in full within the greatest range of speed, because both the hydrostatic and mechanical power transmission systems are arranged in one vehicle.

### BRIEF DESCRIPTION OF THE DRAWINGS

In the following the invention is described in detail with reference to the enclosed drawing, where
Fig. 1 is a schematic diagram of a power transmission system of a vehicle.
Fig. 2 is a schematic diagram of a power transmission system of a vehicle with treads.
Fig. 3 is a coupling of a mechanical power transmission.
Fig. 4 shows the mechanical power transmission with a blocked coupling.

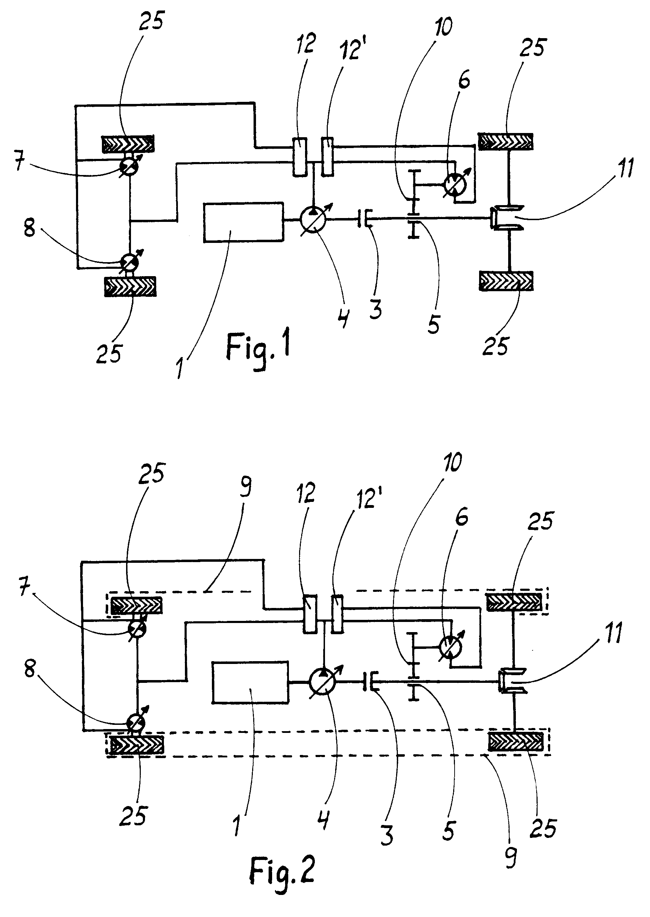

Figure 1 shows a four-wheel working machine, all wheels 25 of which can be driven. Each of the turning wheels of the working machine has its own radial piston type hub motor 7 and 8, the piston of which switches to free rotation when no power is transmitted over them. By means of a gear 10 and a differential 11 the hydraulic motor 6 is coupled to rotate the wheels at one end of the working machine. Over clutch 3 the gear 10 is connected to a shaft directed to the differential 11 and therefore both the gear box, i.e., the casing for the gear 10, and the hydraulic motor 6 can be disengaged from the power transmission. Engine 1 rotates both the hydraulic pump 4 and the mechanical power transmission 11 over the through shaft of the pump. By means of valves 12 and 12' it is possible to arrange different kinds of coupling between hydraulic pump 4 and the hydraulic motors 6, 7 and 8. By means of the system a coupling of valves 12 and 12' can be made, wherein all wheels are driven. Pump 4 delivery goes to the hub motors 7 and 8 and to the hydraulic motor 6 and further to the wheels over gear 10 and differential 11. With this coupling, slow motion is produced for the working machine and a great torsional moment for the wheels. The mechanical coupling 5 is then in an off-position.

On closing valve 12 the pump delivers fluid, controlled by valve 12', to hydraulic motor 6, the speed of rotation of which then increases considerably. Accordingly, a higher speed range is achieved with the working machine merely by utilizing the wheels which are driven over the differential 11. The mechanical coupling 5 is thereby also in an off-position. The hub motors are in free rotating state, whereby the corresponding wheels are rotating only on their bearings and on efficiency advantage of 5-10% is reached in comparison to both high-speed hub motors and hub motors with planetary gears.

When engine 1 is coupled with toothed coupling 3 over the differential 11 to the driving wheels, and the hydraulic pump 4 and the mechanical coupling are disengaged, the highest range of speed is produced, which is used by road transport. By means of hydraulic motors, the speed of a working machine must be brought to a state, where the coupling can take place with coupling 5. For a successful coupling, the speed must be of such a rate that the engine 1 speed of rotation is not dropped below the range of recommended usage for the motor.

Figure 2 shows a working machine with treads 9. The figure illustrates an exemplified coupling, wherein the engine 1 utilizes a hydraulic pump 4, the delivery of which goes to the hub motors 7 and 8. Through adjustment of the speed of fluid to motors 7 and 8 by choking or even by rotating the hub motors 7 and 8 in different directions, the working machine can be steered by adjusting the rotation of the hub motors separately. The pressure fluid lines in figure 2 are only shown diagrammatically. An individual adjustment of motors 7 and 8 requires separate pressure fluid lines. Also in this example the drive can be transmitted to the treads 9 even over the differential by means of the hydraulic motor or mechanical power transmission. The existence of a differential is most essential especially on using treads, because the drive transmitted over the differential does not disturb the steering by means of hub motors 7 and 8.

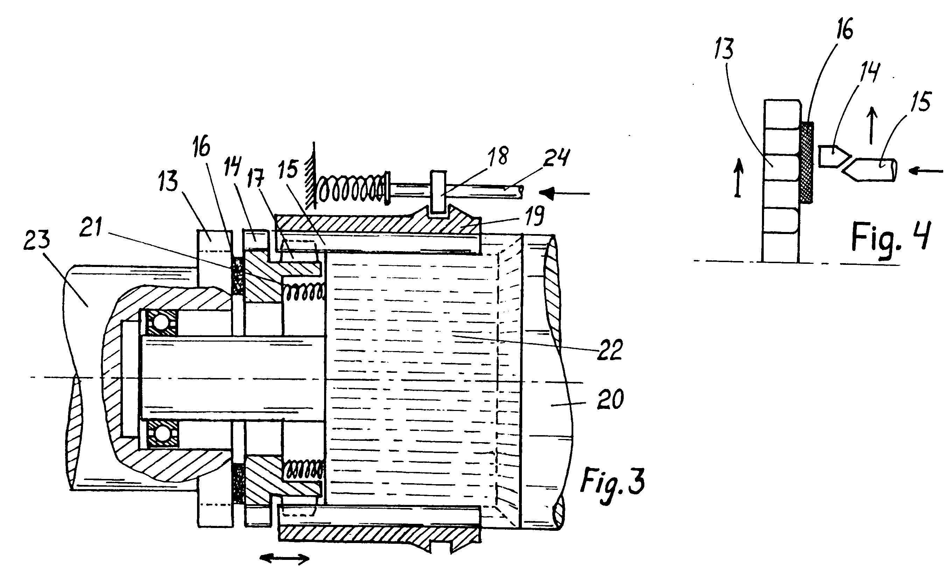

Figure 3 shows a mechanical coupling 5 of figures 1 and 2, by means of which the power transmission is coupled between shafts 20 and 23. On shaft 20 there is a grooved bushing 19, which produces the coupling by sliding to the left over the teeth of blocking ring 14 onto the teeth 13 of the other shaft 23. On the surface of shaft 20 there is also straight grooving or indentation 22, which transmits the motion to bushing 19. Bushing 19 is fitted with a similar indentation 15. Bushing 19 may be slid by a slight force by pushing shafts 24 and roll 18. The motion is returned by a back-spring. The thrust motion can be hydraulic. Upon coupling, shaft 20 rotates faster than shaft 23, because with the hydraulic power system the vehicle is accelerated at high rotation speed so that the speed would be increased with a further gear, which is the mechanical coupling. Coupling is started by sliding bushing 19 to the left and reducing the engine rotations. While the bushing is sliding, the coupling blocking ring 14 also slides to the left by the action of spring 21 or by means of bushing 19. Shafts 20, 23 rotate at different speeds and, when the blocking ring with its friction ring presses against the end of shaft 23, the different in speed of these shafts makes the blocking ring 14 move with respect to bushing 19. The blocking ring 14 moves approximately half a tooth width, as shown in figure 4a, to a different position with respect to busing 19 and tooth 15. Since the difference of speed still remains between the shafts, the tooth of the blocking ring 14 and the tooth 15 of bushing 19 contact and push against each other with their bevelled surfaces so that the sliding apparatus 18, 24 of the bushing cannot press the bushing 19 as far as the coupling. Blocking ring 14 has its tooth 17 in the bushing 19 groove with a rather loose fit, due to which they can sustain their mutual position of half-tooth-width. As shown in figure 4 the engine speed of rotation has dropped almost exactly to the speed of shaft 23 or below it, i.e. the teeth 14 and 15 are in the arrow direction as well as the teeth 13 of shaft 23, and the engine speed of rotation is dropping, under the speed of shaft 23, the teeth 14 of the blocking ring, pulled by friction ring 16, slides off the front of tooth 15 and tooth 15 can proceed into the gaps of teeth 13 while rotating almost at the same speed as the shaft. Then, when the coupling has switched on, it is possible, for instance, to raise the engine speed of rotation automatically or indicate that coupling has taken place. The blocking ring 14 is not a synchronous ring that synchronizes speeds equally but it prevents coupling when the shafts do not rotate at almost the same speed. Great rotating masses are connected to each shaft and thus an incorrectly timed coupling may lead to damages. While engaging the mechanical power transmission, the hydraulic pumps are disengaged or switch to free rotation, if they are not needed for some other use.

In power transmission effected by the hydraulic system, several steps of speed are produced by connecting pumps parallel with one motor or, correspondingly, by dividing the delivery of one pump to several motors. Of course, with more than one pump and one motor, various versions of coupling and steps of speed are possible.

## Claims

1. A power transmission system for a vehicle comprising; an engine (1);
a first drive shaft having first driving wheels thereon;
a second drive shaft having second driving wheels thereon;
a hydrostatic power transmission comprising a hydraulic pump (4) driven by the engine (1);
a hub motor (7,8) attached to each driving wheel of the first driving wheels for driving said vehicle in a lower-speed range; each of said hub motor being operated by the hydraulic pump (4);
a hydraulic motor (6) being operated by the hydraulic pump (4) and mechanical power transmission between said motor and the second driving wheels;
means (12,12') for delivering fluid from the hydraulic pump (4) to only the hub motors (7,8), to only the hydraulic motor (6), and to both the hub and hydraulic motors for producing different speed ranges; and
a mechanical power transmission connecting the engine (1) directly by means of a coupling (3) to said second driving wheels whereby a higher speed range of the vehicle is reached.

2. The power transmission system according to claim 1 wherein the coupling comprises a toothed coupling (3).

3. The power transmission system according to claim 2 wherein the toothed coupling includes a system for preventing coupling of the mechanical power transmission until shafts which are to be coupled are rotating at substantially the same speed.

4. The power transmission system according claim 1 wherein the vehicle includes bands connected to at least one of the first driving wheels and one of the second driving wheel to form a pair of mutually rotatable wheels, and mutual rotation speed of said pair of wheels is adjustable to allow steering of the vehicle.

5. The power transmission system according to claim 1 further comprising a differential (11) over which there is power transmission to said second driving wheels.

## Patentansprüche

1. Ein Kraftübertragungssystem für ein Fahrzeug, bestehend aus; einem Motor (1);
einer ersten Treibachse mit ersten Treibrädern darauf;
einer zweiten Treibachse mit zweiten Treibrädern darauf;
eine hydrostatische Kraftübertragung mit hydraulischer Pumpe (4), die mit Motor (1) betrieben wird;
einem Nabenmotor (7,8) an jedem Treibrad der ersten Treibrädern zum Treiben des genannten Fahrzeuges in einem langsamen Geschwindikeitsbereich; jeder der genannten Motoren wird mit der hydraulischen Pumpe (4) betrieben.
einem hydraulischen Motor (6) betrieben von der hydraulischen Pumpe (4) und mechanischer Kraftübertragung zwischen dem genannten Motor und den zweiten Treibrädern;
Mittel zur Förderung der Flüssikeit aus der hydraulischen Pumpe (4) nur zu den Nabenmotoren (7,8), nur zu dem hydraulischen Motor (6) und sowohl zu den Naben- als den hydraulischen Motoren, um verschiedenen Geschwindikeitsbereichen zu produzieren; und einer mechanischen Kraftübertragung, um den Motor (1) direkt mit Hilfe einer Kupplung (3) zu den genannten zweiten Treibrädern anzuschliessen, wobei eine höhere Geschwindigkeitsbereich des Fahrzeugs erzielt wird.

2. Das Kraftübertragungssystem laut Anspruch 1, worin die Kupplung aus einem gezahnten Kupplung besteht.

3. Das Kraftübertragungssystem laut Anspruch 2, worin die gezahnte Kupplung ein System hat, zur Verhinderung des Einschaltens der mechanischen Kraftübertragung bevor die anzuschaltenden Achseln wesentlich mit gleicher Gescwindigkeit rotieren.

4. Das Kraftübertragungssystem laut Anspruch 1, worin das Fahrzeug Raupenbänder hat, die wenigstens zu einem der ersten Treibrädern und einem der zweiten Treibrädern angebracht worden sind, um ein Paar gegenseitig rotierbare Räder zu erzeugen, und worin die gegenseitige Geschwindikeit des genannten Radpaars reguliert werden kann, um das Fahrzeug zu steuern.

5. Das Kraftübertragungssystem laut Anspruch 1 bestehend aus noch einem Differential (11) über welchen Kraftübertragung zu den gegannten zweiten Treibrädern geschieht.

## Revendications

1. Un système de transmission pour un véhicule comprenant:
- un moteur (1);
- un premier arbre moteur avec les premières roues motrices là-dessus;
- un deuxième arbre moteur avec les deuxièmes roues motrices là-dessus;
- une transmission hydrostatique comprenant une pompe hydraulique (4) commandée par le moteur,
- un moteur de moyeu (7,8) attaché sur chaque roue motrice de la première paire pour la conduite du véhiculé à basse vitesse; chacun desdits moteurs de moyeu étant entraîné par la pompe hydraulique (4);
- un moteur hydraulique (8) entraîné par la pompe hydraulique (4) et par la transmission mécanique entre ledit moteur et les deuxièmes roues motrices;
- des moyens (12,12') pour envoyer le fluide de refoulement de la pompe hydraulique (4) seulement aux moteurs de moyeu (7,8), seulement au moteur hydraulique (6) ou aussi bien aux moteurs de moyeu qu'au moteur hydraulique pour produire des différents régimes de vitesses; et
- une transmission mécanique reliant, par moyen d'un accouplement (3), le moteur (1) directement auxdites deuxièmes roues motrices, ce qui permet au véhicule d'atteindre un régime de vitesse plus grande.

2. Un système de transmission conformément à la revendication 1, où l'accouplement inclut un accouplement à dents (3).

3. Un système de transmission conformément à la revendication 2, où l'accouplement à dents comprend un système qui empêche l'accouplement de la transmission mécanique jusqu'à ce que les arbres à accoupler atteignent la même vitesse de rotation.

4. Un système de transmission conformément à la revendication 1, où le véhicule est muni de bandes connectées au moins à l'une des premières roues motrices et au moins à l'une des deuxièmes roues motrices de manière à former une paire de roues tournant ensemble, la vitesse de rotation desdites roues étant réglable pour que la commande de la direction du véhicule soit possible.

5. Un système de transmission conformément à la revendication 1 comprenant aussi un différentiel (11) par lequel se fait la transmission de force vers lesdites deuxièmes roues motrices.
